# EUROPEAN PATENT APPLICATION

(11) **EP 3 145 233 A1**
(43) Date of publication of application: **22.03.2017**
(21) Application number: 14891710.7
(22) Date of filing: 22.10.2014
(51) Int. Cl.: H04W 16/10

(54) **SPECTRUM RESOURCE ALLOCATION METHOD AND SYSTEM, AND SUBSYSTEM MANAGEMENT NODE**

(30) Priority: 15.05.2014 CN 201410206042
(71) Applicant: ZTE Corporation, Shenzhen, Guangdong 518057 (CN)
(72) Inventor: MIAO, Ting, Shenzhen Guangdong 518057 (CN); REN, Longtao, Shenzhen Guangdong 518057 (CN); LI, Ruimei, Shenzhen Guangdong 518057 (CN); LIU, Xing, Shenzhen Guangdong 518057 (CN); WANG, Bin, Shenzhen Guangdong 518057 (CN)
(74) Representative: Benson, Christopher
(86) International application number: PCT/CN2014/089178
(87) International publication number: WO 2015/172517

(57) **Abstract**

Disclosed is a spectrum resource allocation method, including: a secondary system management node receiving a request message sent by a secondary system device for a priority channel application qualification; and judging whether to give the priority channel application qualification to the secondary system device according to the request message, and returning a response message to the secondary system device according to the judgment result. Also disclosed are a spectrum resource allocation system and a secondary system management node.

## Description

### Technical Field

The present invention relates to the technical field of wireless communication and cognitive radio, in particular to a spectrum resource allocation method and system, and a secondary system device.

### Background of the Related Art

With the continuous progress of the radio technology, various radio services emerge numerously. However, spectrum resources on which the radio services depend are limited. With the continuous increase of demands by users for bandwidth, the spectrum resources are in a very severe shortage situation. However, in the traditional fixed spectrum allocation mode, the utilization rate of the spectrum resources is relatively low. In a certain sense, this allocation mode of fixedly allocating the spectrum resources to authorized systems causes the very severe shortage situation of the spectrum resources. The cognitive radio technology breaks through the traditional fixed spectrum allocation system, realizes the dynamic allocation of spectrums among systems and improves the utilization efficiency of the spectrums.

With the continuous increase of daily communication demands of people, people have not been satisfied with simple voice data communication, the ratio of video streaming data services in communication of people continuously increases, this requires greater bandwidth for providing supports and the International Mobile Telecom (IMT) system is in an unprecedented spectrum shortage situation. However, for broadcast television systems, the spectrum resources have an available space to a very great extent. For example, some broadcast television system spectrums are not used in some areas; and although some broadcast television system spectrums cover some areas, but they are not used at certain moments and the overall utilization rate is low. However, the fixed spectrum allocation mode causes that the unused spectrum resources cannot be reused, e.g., cannot be used by the IMT system. Through the cognitive radio technology, the IMT system, by acquiring the information of the broadcast television systems, waits for an opportunity to occupy spectrum resources which are not used by the broadcast television systems in space and time, thereby the utilization rate of the spectrums of the broadcast television systems is improved and the spectrum shortage situation of the IMT system is ameliorated.

This spectrum use mode that a secondary system device waits for an opportunity to occupy spectrum resources of a primary system must guarantee that users of the primary system are effectively protected, i.e., when the secondary system uses the spectrum resources of the primary system, no harmful interference shall be caused to the users of the primary system, which is a precondition that the cognitive radio technology can be realized. In order to achieve this purpose, firstly, the used spectrums and transmitting parameters of the secondary system device will be restricted by primary system protection requirements and decisions need to be accurately made when these parameters are initially determined; and secondly, the secondary system device needs to learn about the emergence of primary system users, so as to exit from the spectrum resources at the time when the reemergence of the primary system users on the spectrum resources occupied by the secondary system device is found, to thereby prevent interference from being caused to the primary system users.

Typical primary system idle spectrum resources, for example, include TV White Space (TVWS), i.e., spectrum resources, which are not used by the primary system, within 470MHz-790MHz.

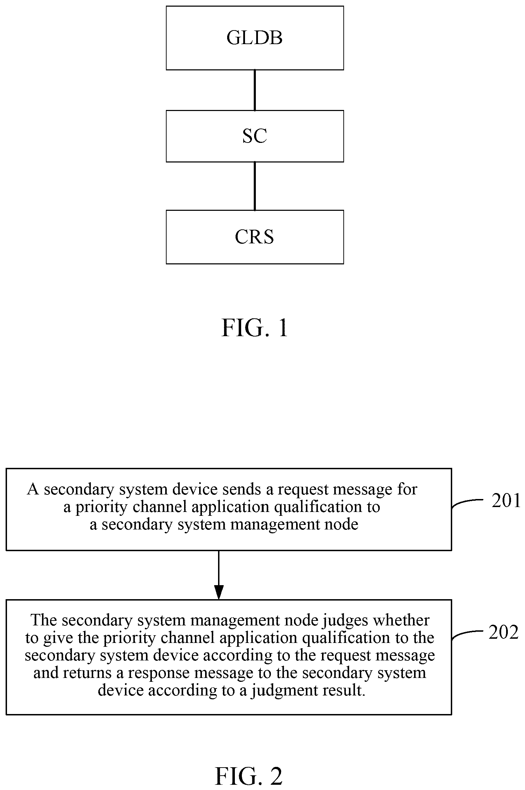

Hereunder the basic system architecture of the Cognitive Radio (CR) technology will be introduced by taking TVWS spectrums as an example. The architecture of the system is as illustrated in FIG. 1.

In the architecture of the system, a Geolocation Database (GLDB) is taken as an example of a primary system user protection management node, a Spectrum Coordinator (SC) is taken as an example of a secondary system management node and a Cognitive Radio System (CRS) is taken as an example of a secondary system. Therefore, the architecture of the system mainly includes the GLDB, the SC and the CRS.

The GLDB is responsible for protecting the primary system, providing a primary system spectrum use situation to the SC or the CRS and preventing the primary system from being interfered by the secondary system. Specifically, it provides idle spectrum resources at the location thereof to the CRS and calculates the maximum allowable transmitting power of the CRS according to a primary system user protection criterion.

The SC is responsible for coexistence management, priority management and measurement management among CRSs; the SC has two modes, i.e., a management mode and an information mode, and in the management mode, the SC is responsible for coexistence solution and spectrum allocation among secondary system devices subordinated to it; and in the information mode, the SC is responsible for providing information needed for coexistence solution to secondary system user equipment subordinated to it.

The CRS is a secondary system device and can represent a cellular network system network such as a Long Term Evolution (LTE) system, a 3G system or a 2G system, or an IEEE802 system network such as a Wireless Local Area Network (WLAN), a Wireless Regional Area Network (WRAN) or a World interoperability for microwave access (Wimax) network, and in the CRS, what specifically interacts with an upper node (GLDB or SC) is a base station in a cellular network system or an access point in an IEEE system.

In the prior art, a specific method for the CRS to apply for a priority channel has already been provided, and for specific contents, a reference may be made to 103.145 protocol of ETSI RRS standard organization; and however, in the entire application process, the prior art does not provide specific solutions with respect to what kinds of CRSs have a priority channel application qualification and how the CRSs request and obtain the application qualification. This firstly causes the problems that the technical solution is not complete and the CRS cannot normally obtain the application qualification, further the CRS cannot apply for the priority channel and consequently the application made by the CRS for the priority channel cannot be realized.

### Summary of the Invention

In order to solve the problem existing in the prior art, the embodiments of the present invention are expected to provide a spectrum resource allocation method and system, and a secondary system management node.

The technical solutions of the embodiments of the present invention are implemented as follows:
The embodiment of the present invention provides a spectrum resource allocation method, including:
   a secondary system management node receiving a request message sent by a secondary system device for a priority channel application qualification; and judging whether to give the priority channel application qualification to the secondary system device according to the request message, and returning a response message to the secondary system device according to the judgment result.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

The secondary system management node judging whether to give the priority channel application qualification to the secondary system device according to the request message includes:
judging whether all information in the request message satisfies a condition for giving the priority channel application qualification, and when the judgment result is yes, giving the priority channel application qualification to the secondary system device, and feeding the response message about the priority channel application qualification back to the secondary system device.

When at least one piece of information in the request message does not satisfy the condition for giving the priority channel application qualification, the method further includes:
not giving the priority channel application qualification to the secondary system device.

When at least one piece of information in the request message does not satisfy the condition for giving the priority channel application qualification, the method further includes:
judging whether the number of pieces of information, which does not satisfy the condition for giving the priority channel application qualification, in the request message is greater than a preset threshold; if yes, not giving the priority channel application qualification to the secondary system device; and if no, giving the priority channel application qualification to the secondary system device.

When at least one piece of information in the request message does not satisfy the condition for giving the priority channel application qualification, the method further includes:
judging whether information, which does not satisfy the condition for giving the priority channel application qualification, in the request message is preset adjustable information; if yes, giving the priority channel application qualification to the secondary system device; and if no, not giving the priority channel application qualification to the secondary system device.

When at least one piece of information in the request message does not satisfy the condition for giving the priority channel application qualification, the method further includes:
judging whether information, which does not satisfy the condition for giving the priority channel application qualification, in the request message is preset nonadjustable information; if yes, not giving the priority channel application qualification to the secondary system device; and if no, giving the priority channel application qualification to the secondary system device.

Before the secondary system management node judging whether to give the priority channel application qualification to the secondary system device according to the request message, the method further includes:
the secondary system management node setting a preset condition and a preset threshold corresponding to each piece of information, and setting adjustable information or nonadjustable information corresponding to each piece of information.

The response message includes:
identification of giving or not giving the priority channel application qualification to the secondary system device.

The response message further includes at least one of the following information: secondary system device identification, specific reason of giving or not giving, and parameter adjustment configuration.

The embodiment of the present invention provides a spectrum resource allocation system, including a secondary system device and a secondary system management node, wherein,
the secondary system device is configured to send a request message for a priority channel application qualification to the secondary system management node; and the secondary system management node is configured to judge whether to give the priority channel application qualification to the secondary system device according to the request message, and return a response message to the secondary system device according to the judgment result.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

The secondary system management node is configured to judge whether all information in the request message satisfies a condition for giving the priority channel application qualification; and when the judgment result is yes, give the priority channel application qualification to the secondary system device, and feed the response message about the priority channel application qualification back to the secondary system device.

The secondary system management node is configured to, when at least one piece of information in the request message does not satisfy the condition for giving the priority channel application qualification, not give the priority channel application qualification to the secondary system device.

The secondary system management node is configured to, when at least one piece of information in the request message does not satisfy the condition for giving the priority channel application qualification, judge whether the number of pieces of information, which does not satisfy the condition for giving the priority channel application qualification, in the request message is greater than a preset threshold; if yes, not give the priority channel application qualification to the secondary system device; and if no, give the priority channel application qualification to the secondary system device.

The secondary system management node is configured to, when at least one piece of information in the request message does not satisfy the condition for giving the priority channel application qualification, judge whether information, which does not satisfy the condition for giving the priority channel application qualification, in the request message is preset adjustable information; if yes, give the priority channel application qualification to the secondary system device; and if no, not give the priority channel application qualification to the secondary system device.

The secondary system management node is configured to, when at least one piece of information in the request message does not satisfy the condition for giving the priority channel application qualification, judge whether information, which does not satisfy the condition for giving the priority channel application qualification, in the request message is preset nonadjustable information; if yes, not give the priority channel application qualification to the secondary system device; and if no, give the priority channel application qualification to the secondary system device.

The embodiment of the present invention provides a secondary system management node, including a request message receiving module, a judgment module and a response module, wherein,
the request message receiving module is configured to receive a request message sent by a secondary system device for a priority channel application qualification;
the judgment module is configured to judge whether to give the priority channel application qualification to the secondary system device according to the request message; and
the response module is configured to return a response message to the secondary system device according to the judgment result of the judgment module.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

The judgment module is configured to judge whether all information in the request message satisfies a condition for giving the priority channel application qualification, and when the judgment result is yes, give the priority channel application qualification to the secondary system device, and feed the response message about the priority channel application qualification back to the secondary system device.

The judgment module is configured to, when at least one piece of information in the request message does not satisfy the condition for giving the priority channel application qualification, not give the priority channel application qualification to the secondary system device.

The judgment module is configured to, when at least one piece of information in the request message does not satisfy the condition for giving the priority channel application qualification, judge whether the number of pieces of information, which does not satisfy the condition for giving the priority channel application qualification, in the request message is greater than a preset threshold; if yes, not give the priority channel application qualification to the secondary system device; and if no, give the priority channel application qualification to the secondary system device.

The judgment module is configured to, when at least one piece of information in the request message does not satisfy the condition for giving the priority channel application qualification, judge whether information, which does not satisfy the condition for giving the priority channel application qualification, in the request message is preset adjustable information; if yes, give the priority channel application qualification to the secondary system device; and if no, not give the priority channel application qualification to the secondary system device.

The judgment module is configured to, when at least one piece of information in the request message does not satisfy the condition for giving the priority channel application qualification, judge whether information, which does not satisfy the condition for giving the priority channel application qualification, in the request message is preset nonadjustable information; if yes, not give the priority channel application qualification to the secondary system device; and if no, give the priority channel application qualification to the secondary system device.

The embodiment of the present invention further provides a computer-readable storage medium, including a group of computer-executable instructions, which are used for executing the spectrum resource allocation method provided by the embodiment of the present invention.

According to the spectrum resource allocation method and system, and the secondary system management node provided by the embodiments of the present invention, the secondary system management node receives the request message sent by the secondary system device for the priority channel application qualification; and judges whether to give the priority channel application qualification to the secondary system device according to the request message, and returns the response message to the secondary system device according to the judgment result. As such, the secondary system device can obtain the priority channel application qualification through application, and the secondary system management node can control to give the priority channel application qualification to what kinds of secondary system devices in a reasonable way; and thus not only the reasonable utilization and allocation of spectrum resources are guaranteed, but also the completeness of the allocation solution of the spectrum resources in cognitive radio is guaranteed.

### Brief Description of Drawings

FIG. 1 illustrates a basic system architecture diagram of a cognitive radio technology in the prior art.
FIG. 2 illustrates a flowchart of a spectrum resource allocation method provided by embodiment 1 of the present invention.
FIG. 3 illustrates an exemplary flowchart of a spectrum resource allocation method provided by the embodiment of the present invention.
FIG. 4 illustrates a basic structure diagram of a spectrum resource allocation system provided by embodiment 2 of the present invention.
FIG. 5 illustrates a basic structure diagram of a secondary system management node provided by embodiment 3 of the present invention.

### Preferred Embodiments of the Invention

In the embodiments of the present invention, a secondary system management node receives a request message sent by a secondary system device for a priority channel application qualification; and judges whether to give the priority channel application qualification to the secondary system device according to the request message, and return a response message to the secondary system device according to the judgment result.

The present invention will be further described in the below embodiments in detail with reference to the drawings.

The priority channel in the embodiments of the present invention refers to a channel having a priority attribute; and the secondary system device uses the channel and will not be influenced by the interference of other secondary system devices within specified time, and the QoS (Quality of Service) of the secondary system device in the period of using the channel can be guaranteed.

Priority channels usually have two sources: 1. reserved by a system: the priority channels reserved by the system specifically refer to the priority channels which are reserved by the GLDB and are notified to the secondary system management node; and 2. applied by the secondary system management node from the GLDB, in other words, the GLDB selects part of channels as priority channels according to the application of the secondary system management node and feeds the information of the priority channels back to the secondary system management node.

For example, the priority channel may refer to a TVWS channel having a priority attribute; and the secondary system device uses the channel and will not be influenced by the interference of other secondary system devices within specified time, and thus the QoS of the secondary system device in the period of using the channel can be guaranteed.

### Embodiment 1

Embodiment 1 of the present invention provides a spectrum resource allocation method. As illustrated in FIG. 2, the method includes the following steps:
In step 201, a secondary system device sends a request message for a priority channel application qualification to a secondary system management node.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

Here, the qualification may be considered as a right, and thus the priority channel application qualification is a priority channel application right. In other words, after the priority channel application right is obtained, the application of the priority channel can be made in a subsequent process. Otherwise, the application of the priority channel cannot be made.

Herein, the prepaid price refers to money or equivalent that the secondary system device is willing to pay in order to obtain the priority channel application qualification; the secondary system device parameter includes one or more of the following: geographic location, device identification, wireless communication technology supported by device, device type (mobile or fixed device), transmitting power level, antenna parameter (height, antenna azimuth, pitch and wireless polarity), and transmitting template (ACLR).

In step 202, the secondary system management node judges whether to give the priority channel application qualification to the secondary system device according to the request message and returns a response message to the secondary system device according to the judgment result.

Specifically, the operation that the secondary system management node judges whether to give the priority channel application qualification to the secondary system device according to the request message includes the following operations: whether all information in the request message satisfies a condition for giving the priority channel application qualification is judged;
if yes, the priority channel application qualification is given to the secondary system device, and a response message about the priority channel application qualification is fed back to the secondary system device;
if no, the following alternative solutions may be adopted to judge whether to give the priority channel application qualification to the secondary system device.

Specifically,
in a first solution, the priority channel application qualification is not given to the secondary system device;
in a second solution, whether the number of pieces of information, which does not satisfy the condition for giving the priority channel application qualification, in the request message is greater than a preset threshold is judged; if yes, the priority channel application qualification is not given to the secondary system device; if no, the priority channel application qualification is given to the secondary system device; specifically, the preset threshold here may be set according to actual needs; and for example, the preset threshold is 2, and when the number of pieces of information which does not satisfy the condition for giving the priority channel application qualification is greater than 2 (i.e., 3 or more than 3), the secondary system management node will not give the priority channel application qualification to the secondary system device;
in a third solution, whether information, which does not satisfy the condition for giving the priority channel application qualification, in the request message is preset adjustable information is judged; if yes, the priority channel application qualification is given to the secondary system device; if no, the priority channel application qualification is not given to the secondary system device; and the adjustable information may be set according to actual needs, and alternatively, the adjustable information may be one or more of size of frequency-domain resource, size of time-domain resource and range of region resource of applied priority channel;
in a fourth solution, whether information, which does not satisfy the condition for giving the priority channel application qualification, in the request message is preset nonadjustable information is judged; if yes, the priority channel application qualification is not given to the secondary system device; if no, the priority channel application qualification is given to the secondary system device; and the nonadjustable information may be set according to actual needs, and alternatively, the nonadjustable information may be one or more of request reason, prepaid price and interference threshold.

Herein, before step 202, the secondary system management node further needs to preset corresponding preset conditions aiming at all information, i.e., request reason, secondary system device parameter, size of frequency-domain resource of pre-applied priority channel, size or time length of time-domain resource of pre-applied priority channel, range of region resource of pre-applied priority channel, prepaid price and interference threshold. Therefore, in an actual operation, when the secondary system management node receives the request message for the priority channel application qualification, firstly the information in the request message is extracted, thereafter whether each piece of information satisfies the preset condition set for this information is judged one by one aiming at the extracted information, and if all information satisfies the set preset conditions, it is determined to give the priority channel application qualification to the secondary system device; otherwise, whether to give the priority channel application qualification to the secondary system device is determined according to the first solution, the second solution, the third solution or the fourth solution; and in addition, the secondary system management node further needs to preset a preset threshold and adjustable information, or preset a preset threshold and nonadjustable information.

Herein, after the secondary system management node judges whether to give the priority channel application qualification to the secondary system device, the secondary system management node will feed a response message about the priority channel application qualification back to the secondary system device; the response message includes: identification of giving or not giving the priority channel application qualification to the secondary system device; and the response message may further include at least one of the following information: secondary system device identification, specific reason of giving or not giving, and parameter adjustment configuration.

Aiming at different situations, the fed-back response messages may be different. Specifically,
when all information in the request message satisfies the condition for giving the priority channel application qualification to the secondary system device, the fed-back response message includes: identification of giving the priority channel application qualification to the secondary system device; the response message may further include: specific reason of giving; and the response message may further include: secondary system device identification;
when it is determined not to give the priority channel application qualification to the secondary system device according to the first solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the second solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the second solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the third solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the third solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined not to give the priority channel application qualification to the secondary system device according to the fourth solution, the fed-back response message includes: identification of not giving the priority channel application qualification to the secondary system device; and the response message may further include: specific reason of not giving and/or secondary system device identification;
when it is determined to give the priority channel application qualification to the secondary system device according to the fourth solution, the fed-back response message includes: identification of giving the priority channel application qualification to the secondary system device and parameter adjustment configuration; and the response message may further include: specific reason of giving and/or secondary system device identification.

Specifically, the identification of giving the priority channel application qualification to the secondary system device and the identification of not giving the priority channel application qualification to the secondary system device may be set to be letters, numbers, characters or the like which can distinguish whether to give the priority channel application qualification to the secondary system device, and are not limited herein. For example, it may be set as that, when the identification is 1, it represents giving the priority channel application qualification to the secondary system device, and when the identification is 0, it represents not giving the priority channel application qualification to the secondary system device.

The method provided by embodiment 1 of the present invention will be specifically described below through specific examples.

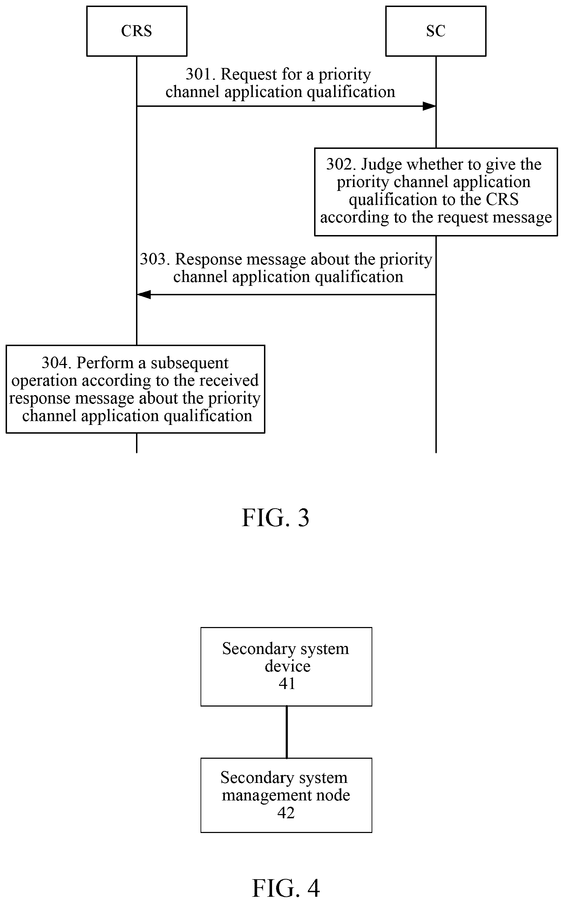

FIG. 3 illustrates a flowchart of interaction between a CRS as an example of a secondary system device and an SC as an example of a secondary system management node.

### Example 1

In step 301, a CRS requests an SC for a priority channel application qualification.

Specifically, the CRS sends a request message for the priority channel application qualification to the SC, wherein the request message contains the following information:
request reason: the CRS is not interfered by other CRSs and the QoS is guaranteed;
size of frequency-domain resource of pre-applied priority channel: 5MHz;
size or time length of time-domain resource of pre-applied priority channel: starting from 14:00, time length: 1h;
range of region resource of pre-applied priority channel: {geographic region A};
prepaid price: 10000 Chinese Yuan per MHz per hour; and
interference threshold: -104.5dBm.

In step 302, the SC judges whether to give the priority channel application qualification to the CRS according to the request message.

Specifically, the SC judges that the request reason related to the application made by the CRS is not included in preset reasons that the priority channel cannot be applied according to the "request reason", and thereby judges that the "request reason" satisfies a condition for giving the priority channel application qualification;
the SC judges whether the frequency-domain resource applied by the CRS is smaller than the total bandwidth of the existing priority channel according to the "size of frequency-domain resource of pre-applied priority channel", upon judgment, the frequency-domain resource applied by the CRS is smaller than the total bandwidth of the existing priority channel, and the SC determines that the "size of frequency-domain resource of pre-applied priority channel" satisfies a condition for giving the priority channel application qualification;
the SC judges whether there is an idle priority channel in the time-domain resource applied by the CRS according to the "size of time-domain resource of pre-applied priority channel", upon judgment, there is an idle priority channel in the time-domain resource applied by the CRS, and the SC determines that the size of time-domain resource of pre-applied priority channel satisfies a condition for giving the priority channel application qualification;
the SC judges whether there is an idle priority channel in the range of the region resource applied by the CRS according to the "range of region resource of pre-applied priority channel", upon judgment, there is an idle priority channel in the range of the region resource, and the SC determines that the range of region resource of pre-applied priority channel satisfies a condition for giving the priority channel application qualification;
the SC judges whether the prepaid price given by the CRS is higher than a price threshold predefined by the SC according to the "prepaid price", upon judgment, the prepaid price is higher than the price threshold predefined by the SC, and the SC determines that the prepaid price satisfies a condition for giving the priority channel application qualification;
the SC judges whether the interference threshold related to the application made by the CRS is lower than an interference threshold predefined by the SC according to the "interference threshold", upon judgment, the interference threshold is lower than the interference threshold predefined by the SC, and the SC determines that the interference threshold satisfies a condition for giving the priority channel application qualification.

Herein, the SC takes an intersection of the above-mentioned judgment contents and finally judges that the CRS has the priority channel application qualification.

Herein, the SC generates a response message about the priority channel application qualification according to the above-mentioned judgment result, wherein the response message contains the following information: identification of giving the priority channel application qualification to the CRS and specific reason of giving, wherein the specific reason is that the condition for giving is satisfied.

In step 303, the SC sends the response message about the priority channel application qualification to the CRS.

In step 304, the CRS performs a subsequent operation according to the received response message about the priority channel application qualification.

Specifically, in this example, after receiving the response message, the CRS determines that itself has the priority channel application qualification and applies to the SC for a priority channel.

### Example 2

In step 301, a CRS requests an SC for a priority channel application qualification.

Specifically, the CRS sends a request message for the priority channel application qualification to the SC, wherein the request message contains the following information:
request reason: the CRS is not interfered by other CRSs and the QoS is guaranteed;
size of frequency-domain resource of pre-applied priority channel: 5MHz;
size or time length of time-domain resource of pre-applied priority channel: starting from 14:00, time length: 1h;
range of region resource of pre-applied priority channel: {geographic region A}; and
prepaid price: 10000 Chinese Yuan per MHz per hour.

In step 302, the SC judges whether to give the priority channel application qualification to the CRS according to the request message.

Specifically, the SC judges that the request reason related to the application made by the CRS is not included in preset reasons that the priority channel cannot be applied according to the "request reason", and thereby judges that the "request reason" satisfies a condition for giving the priority channel application qualification;
the SC judges whether the size of the frequency-domain resource applied by the CRS is smaller than the total bandwidth of the existing priority channel according to the "size of frequency-domain resource of pre-applied priority channel", upon judgment, the frequency-domain resource applied by the CRS is greater than the total bandwidth of the existing priority channel, and the SC determines that the "size of frequency-domain resource of pre-applied priority channel" does not satisfy a condition for giving the priority channel application qualification;
the SC judges whether there is an idle priority channel in the time-domain resource applied by the CRS according to the "size of time-domain resource of pre-applied priority channel", upon judgment, there is an idle priority channel in the time-domain resource applied by the CRS, and the SC determines that the size of time-domain resource of pre-applied priority channel satisfies a condition for giving the priority channel application qualification;
the SC judges whether there is an idle priority channel in the range of the region resource applied by the CRS according to the "range of region resource of pre-applied priority channel", upon judgment, there is an idle priority channel in the range of the region resource, and the SC determines that the range of region resource of pre-applied priority channel satisfies a condition for giving the priority channel application qualification;
the SC judges whether the prepaid price given by the CRS is higher than a price threshold predefined by the SC according to the "prepaid price", upon judgment, the prepaid price is higher than the price threshold predefined by the SC, and the SC determines that the prepaid price satisfies a condition for giving the priority channel application qualification.

Herein, the SC takes an intersection of the above-mentioned judgment contents and finally judges that the priority channel application qualification is not given to the CRS.

Herein, the SC generates a response message about the priority channel application qualification according to the above-mentioned judgment result, wherein the response message contains the following information: identification of not giving the priority channel application qualification to the CRS and specific reason of not giving, wherein the specific reason is that the size of the frequency-domain resource of the pre-applied priority channel exceeds the size of the existing priority channels.

In step 303, the SC sends the response message about the priority channel application qualification to the CRS.

In step 304, the CRS performs a subsequent operation according to the received response message about the priority channel application qualification.

Specifically, in this example, the CRS may stop the priority channel application according to the received response message about the priority channel application qualification, or initiate a request again after modifying the corresponding parameter according to the specific reason of not giving.

### Example 3

In step 301, a CRS requests an SC for a priority channel application qualification.

Specifically, the CRS sends a request message for the priority channel application qualification to the SC, wherein the request message contains the following information:
request reason: the CRS is not interfered by other CRSs and the QoS is guaranteed;
size of frequency-domain resource of pre-applied priority channel: 5MHz;
size or time length of time-domain resource of pre-applied priority channel: starting from 14:00, time length: 1h;
range of region resource of pre-applied priority channel: {geographic region A};
prepaid price: 10000 Chinese Yuan per MHz per hour; and
interference threshold: -104.5dBm.

In step 302, the SC judges whether to give the priority channel application qualification to the CRS according to the request message.

Specifically, in this embodiment, "perform processing" refers to:
specifically, the SC judges that the request reason related to the application made by the CRS is not included in preset reasons that the priority channel cannot be applied according to the "request reason", and thereby judges that the "request reason" satisfies a condition for giving the priority channel application qualification;
the SC judges whether the frequency-domain resource applied by the CRS is smaller than the total bandwidth of the existing priority channel according to the "size of frequency-domain resource of pre-applied priority channel", upon judgment, the frequency-domain resource applied by the CRS is greater than the total bandwidth of the existing priority channel, and the SC determines that the "size of frequency-domain resource of pre-applied priority channel" does not satisfy a condition for giving the priority channel application qualification;
the SC judges whether there is an idle priority channel in the time-domain resource applied by the CRS according to the "size of time-domain resource of pre-applied priority channel", upon judgment, there is an idle priority channel in the time-domain resource applied by the CRS, and the SC determines that the size of time-domain resource of pre-applied priority channel satisfies a condition for giving the priority channel application qualification;
the SC judges whether there is an idle priority channel in the range of the regional resource applied by the CRS according to the "range of region resource of pre-applied priority channel", upon judgment, there is an idle priority channel in the range of the region resource, and the SC determines that the range of region resource of pre-applied priority channel satisfies a condition for giving the priority channel application qualification;
the SC judges whether the prepaid price given by the CRS is higher than a price threshold predefined by the SC according to the "prepaid price", upon judgment, the prepaid price is higher than the price threshold predefined by the SC, and the SC determines that the prepaid price satisfies a condition for giving the priority channel application qualification;
the SC judges whether the interference threshold related to the application made by the CRS is lower than an interference threshold predefined by the SC according to the "interference threshold", upon judgment, the interference threshold is lower than the interference threshold predefined by the SC, and the SC determines that the interference threshold satisfies a condition for giving the priority channel application qualification.

Herein, the SC judges whether the number of pieces of information, which does not satisfy the condition for giving the priority channel application channel, is greater than a preset threshold 2; and determines to give the priority channel application qualification to the CRS.

Herein, the SC generates a response message about the priority channel application qualification according to the above-mentioned processing result, wherein the response message contains the following information: identification of giving the priority channel application qualification to the CRS, specific reason of giving and parameter adjustment configuration, wherein the specific reason is that the condition for giving is satisfied, and the parameter adjustment configuration is: adjusting size of frequency-domain resource of applied priority channel to: 3MHz.

In step 303, the SC sends the response message about the priority channel application qualification to the CRS.

In step 304, the CRS performs a subsequent operation according to the received response message about the priority channel application qualification.

Specifically, in this example, after receiving the response message, the CRS adjusts size of frequency-domain resource of applied priority channel to 3MHz according to the response message; and then applies to the SC for a priority channel.

### Embodiment 2

Embodiment 2 of the present invention provides a spectrum resource allocation system. As illustrated in FIG. 4, the system includes: a secondary system device 41 and a secondary system management node 42, wherein the secondary system device 41 is configured to send a request message for a priority channel application qualification to the secondary system management node 42; and the secondary system management node 42 is configured to judge whether to give the priority channel application qualification to the secondary system device 41 according to the request message, and return a response message to the secondary system device 41 according to the judgment result.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

The operation that the secondary system management node 42 judges whether to give the priority channel application qualification to the secondary system device according to the request message includes the following operations:
whether all information in the request message satisfies a condition for giving the priority channel application qualification is judged;
if yes, the priority channel application qualification is given to the secondary system device, and a response message about the priority channel application qualification is fed back to the secondary system device;
if no, the following alternative solutions may be adopted to judge whether to give the priority channel application qualification to the secondary system device.

In a first solution, the priority channel application qualification is not given to the secondary system device;
in a second solution, whether the number of pieces of information, which does not satisfy the condition for giving the priority channel application qualification, in the request message is greater than a preset threshold is judged; if yes, the priority channel application qualification is not given to the secondary system device; if no, the priority channel application qualification is given to the secondary system device; specifically, the preset threshold here may be set according to actual needs; and for example, the preset threshold is 2, and when the number of pieces of information which does not satisfy the condition for giving the priority channel application qualification is greater than 2 (i.e., 3 or more than 3), the secondary system management node will not give the priority channel application qualification to the secondary system device;
in a third solution, whether information, which does not satisfy the condition for giving the priority channel application qualification, in the request message is preset adjustable information is judged; if yes, the priority channel application qualification is given to the secondary system device; if no, the priority channel application qualification is not given to the secondary system device; and the adjustable information may be set according to actual needs, and alternatively, the adjustable information may be one or more of size of frequency-domain resource, size of time-domain resource and range of region resource of applied priority channel.
in a fourth solution, whether information, which does not satisfy the condition for giving the priority channel application qualification, in the request message is preset nonadjustable information is judged; if yes, the priority channel application qualification is not given to the secondary system device; if no, the priority channel application qualification is given to the secondary system device; and the nonadjustable information may be set according to actual needs, and alternatively, the nonadjustable information may be one or more of request reason, prepaid price and interference threshold.

The secondary system management node 42 is further configured to preset corresponding preset conditions aiming at all information, i.e., request reason, secondary system device parameter, size of frequency-domain resource of pre-applied priority channel, size or time length of time-domain resource of pre-applied priority channel, range of region resource of pre-applied priority channel, prepaid price and interference threshold.

The secondary system management node 42 is further configured to, after judging whether to give the priority channel application qualification to the secondary system device according to the request message, return a response message to the secondary system device; the response message includes: identification of giving or not giving the priority channel application qualification to the secondary system device; and the response message may further include: secondary system device identification, and/or specific reason of giving or not giving, and/or parameter adjustment configuration.

Aiming at different situations, the fed-back response messages may be different. Specifically,
when all information in the request message satisfies the condition for giving the priority channel application qualification to the secondary system device, the fed-back response message includes: identification of giving or not giving the priority channel application qualification to the secondary system device; the response message may further include at least one of the following information: secondary system device identification, specific reason of giving or not giving, and parameter adjustment configuration;
when it is determined not to give the priority channel application qualification to the secondary system device according to the first solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the second solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the second solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the third solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the third solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined not to give the priority channel application qualification to the secondary system device according to the fourth solution, the fed-back response message includes: identification of not giving the priority channel application qualification to the secondary system device; and the response message may further include: specific reason of not giving and/or secondary system device identification;
when it is determined to give the priority channel application qualification to the secondary system device according to the fourth solution, the fed-back response message includes: identification of giving the priority channel application qualification to the secondary system device and parameter adjustment configuration; and the response message may further include: specific reason of giving and/or secondary system device identification.

Specifically, the identification of giving the priority channel application qualification to the secondary system device and the identification of not giving the priority channel application qualification to the secondary system device may be set to be letters, numbers, characters or the like which can distinguish whether to give the priority channel application qualification to the secondary system device, and are not limited herein. For example, it may be set as that, when the identification is 1, it represents giving the priority channel application qualification to the secondary system device, and when the identification is 0, it represents not giving the priority channel application qualification to the secondary system device.

### Embodiment 3

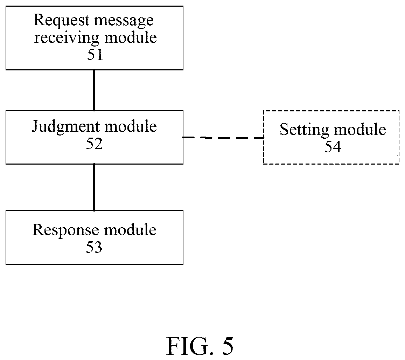

Embodiment 3 of the present invention provides a secondary system management node. As illustrated in FIG. 5, the secondary system management node includes: a request message receiving module 51 and a judgment module 52, wherein the request message receiving module 51 is configured to receive a request message sent by a secondary system device for a priority channel application qualification; the judgment module 52 is configured to judge whether to give the priority channel application qualification to the secondary system device according to the request message; and the response module 53 is configured to return a response message to the secondary system device according to the judgment result of the judgment module 52.

The request message includes one or any combinations of the following information: request reason, secondary system device parameter, size of frequency-domain resource of pre-applied priority channel, size or time length of time-domain resource of pre-applied priority channel, range of region resource of pre-applied priority channel, prepaid price, interference threshold, etc.

The operation that the judgment module 52 judges whether to give the priority channel application qualification to the secondary system device according to the request message includes the following operations:
whether all information in the request message satisfies a condition for giving the priority channel application qualification is judged;
if yes, the priority channel application qualification is given to the secondary system device, and a response message about the priority channel application qualification is fed back to the secondary system device;
if no, the following alternative solutions may be adopted to judge whether to give the priority channel application qualification to the secondary system device.

In a first solution, the priority channel application qualification is not given to the secondary system device;
in a second solution, whether the number of pieces of information, which does not satisfy the condition for giving the priority channel application qualification, in the request message is greater than a preset threshold is judged; if yes, the priority channel application qualification is not given to the secondary system device; if no, the priority channel application qualification is given to the secondary system device; specifically, the preset threshold here may be set according to actual needs; and for example, the preset threshold is 2, when the number of pieces of information which does not satisfy the condition for giving the priority channel application qualification is greater than 2 (i.e., 3 or more than 3), the secondary system management node will not give the priority channel application qualification to the secondary system device;
in a third solution, whether information, which does not satisfy the condition for giving the priority channel application qualification, in the request message is preset adjustable information is judged; if yes, the priority channel application qualification is given to the secondary system device; if no, the priority channel application qualification is not given to the secondary system device; and the adjustable information may be set according to actual needs, and alternatively, the adjustable information may be one or more of size of frequency-domain resource, size of time-domain resource and range of region resource of applied priority channel.
in a fourth solution, whether information, which does not satisfy the condition for giving the priority channel application qualification, in the request message is preset nonadjustable information is judged; if yes, the priority channel application qualification is not given to the secondary system device; if no, the priority channel application qualification is given to the secondary system device; and the nonadjustable information may be set according to actual needs, and alternatively, the nonadjustable information may be one or more of request reason, prepaid price and interference threshold.

The secondary system management node further includes a setting module 54; the setting module 54 is configured to preset corresponding preset conditions aiming at each piece of information; and the information includes: request reason, secondary system device parameter, size of frequency-domain resource of pre-applied priority channel, size or time length of time-domain resource of pre-applied priority channel, range of region resource of pre-applied priority channel, prepaid price, interference threshold, etc.

The setting module 54 is further configured to set a preset threshold and adjustable information; or set a preset threshold and nonadjustable information.

The response module 53 returns a response message to the secondary system device according to the judgment result of the judgment module 52, wherein:
when all information in the request message satisfies the condition for giving the priority channel application qualification to the secondary system device, the fed-back response message includes: identification of giving or not giving the priority channel application qualification to the secondary system device; and the response message may further include at least one of the following information: secondary system device identification, specific reason of giving or not giving, and parameter adjustment configuration.

Aiming at different situations, the fed-back response messages may be different. Specifically,
when all information in the request message satisfies the condition for giving the priority channel application qualification to the secondary system device, the fed-back response message includes: identification of giving the priority channel application qualification to the secondary system device; the response message may further include: specific reason of giving; and the response message may further include: secondary system device identification;
when it is determined not to give the priority channel application qualification to the secondary system device according to the first solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the second solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the second solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined to give the priority channel application qualification to the secondary system device according to the third solution, the fed-back response message includes: identification of giving the priority channel application qualification to the secondary system device and parameter adjustment configuration; and the response message may further include: specific reason of giving and/or secondary system device identification;
when it is determined not to give the priority channel application qualification to the secondary system device according to the third solution, the fed-back response message includes: identification of not giving the priority channel application qualification to the secondary system device; the response message may further include: specific reason of not giving and/or secondary system device identification; and alternatively, the response message may further include: parameter adjustment configuration;
when it is determined not to give the priority channel application qualification to the secondary system device according to the fourth solution, the fed-back response message includes: identification of not giving the priority channel application qualification to the secondary system device; and the response message may further include: specific reason of not giving and/or secondary system device identification;
when it is determined to give the priority channel application qualification to the secondary system device according to the fourth solution, the fed-back response message includes: identification of giving the priority channel application qualification to the secondary system device and parameter adjustment configuration; and the response message may further include: specific reason of giving and/or secondary system device identification.

The identification of giving the priority channel application qualification to the secondary system device and the identification of not giving the priority channel application qualification to the secondary system device may be set to be letters, numbers, characters or the like which can distinguish whether to give the priority channel application qualification to the secondary system device, and are not limited herein. For example, it may be set as that, when the identification is 1, it represents giving the priority channel application qualification to the secondary system device, and when the identification is 0, it represents not giving the priority channel application qualification to the secondary system device.

In a specific implementation process, the request message receiving module 51 and the response module 53 may be implemented through a communication function chip in the secondary system management node; and the judgment module 52 and the setting module 54 may be implemented through a Central Processing Unit (CPU), a Micro Processing Unit (MPU), a Digital Signal Processor (DSP) or a Field Programmable Gate Array (FPGA) in the secondary system management node.

The embodiment of the present invention further provides a computer-readable storage medium, including a group of computer-executable instructions, which are used for executing the spectrum resource allocation method provided by the embodiment of the present invention.

One skilled in the art shall understand that the embodiments of the present invention may be provided in the form of methods, systems or computer program products. Therefore, the present invention may adopt the form of full hardware embodiments, full software embodiments or combined software and hardware embodiments. In addition, the present invention may adopt the form of computer program products implemented based on one or more of computer usable memory media (including but not limited to disk memories, optical memories, etc.) containing computer usable program codes therein.

The present invention is described by referring to flowcharts and/or block diagrams of the method, the apparatus (system) and the computer program product according to the embodiments of the present invention. It should be understood that each process and/or block in the flowcharts and/or block diagrams and combinations of processes and/or blocks in the flowcharts and/or block diagrams may be implemented through computer program instructions. These computer program instructions may be provided to processors of general-purpose computers, special-purpose computers, embedded computers or other programmable data processing devices to produce a machine, such that instructions executed through processors of computers or other programmable data processing devices produce means for implementing functions designated in one or more processes of the flowcharts and/or one or more blocks of the block diagrams.

These computer program instructions may also be stored in computer-readable memories which can guide computers or other programmable data processing devices to work in a specific manner, such that the instructions stored in the computer-readable memories produce products including instruction means, and the instruction means realize functions designated in one or more processes of the flowcharts and/or one or more blocks of the block diagrams.

These computer program instructions may also be loaded to computers or other programmable data processing devices, such that a series of operation steps are executed on the computers or other programmable devices to perform processing realized by the computers, such that the instructions which are executed on the computers or other programmable devices provide steps for realizing functions designated in one or more processes of the flowcharts and/or one or more blocks of the block diagrams.

The above-mentioned embodiments are just preferred embodiments of the present invention and are not used for limiting the scope of the present invention.

## Claims

1. A method for allocating spectrum resource, comprising:
a secondary system management node receiving a request message sent by a secondary system device for a priority channel application qualification; and judging whether to give the priority channel application qualification to the secondary system device according to the request message, and returning a response message to the secondary system device according to the judgment result.

2. The method according to claim 1, wherein the request message comprises one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

3. The method according to claim 2, wherein the secondary system management node judging whether to give the priority channel application qualification to the secondary system device according to the request message comprises:
judging whether all information in the request message satisfies a condition for giving the priority channel application qualification, and when a judgment result is yes, giving the priority channel application qualification to the secondary system device, and feeding the response message about the priority channel application qualification back to the secondary system device.

4. The method according to claim 3, wherein, when at least one piece of information in the request message does not satisfy the condition for giving the priority channel application qualification, the method further comprises:
not giving the priority channel application qualification to the secondary system device.

5. The method according to claim 3, wherein, when at least one piece of information in the request message does not satisfy the condition for giving the priority channel application qualification, the method further comprises:
judging whether a number of pieces of information, which does not satisfy the condition for giving the priority channel application qualification, in the request message is greater than a preset threshold; if yes, not giving the priority channel application qualification to the secondary system device; and if no, giving the priority channel application qualification to the secondary system device.

6. The method according to claim 3, wherein, when at least one piece of information in the request message does not satisfy the condition for giving the priority channel application qualification, the method further comprises:
judging whether information, which does not satisfy the condition for giving the priority channel application qualification, in the request message is preset adjustable information; if yes, giving the priority channel application qualification to the secondary system device; and if no, not giving the priority channel application qualification to the secondary system device.

7. The method according to claim 3, wherein, when at least one piece of information in the request message does not satisfy the condition for giving the priority channel application qualification, the method further comprises:
judging whether information, which does not satisfy the condition for giving the priority channel application qualification, in the request message is preset nonadjustable information; if yes, not giving the priority channel application qualification to the secondary system device; and if no, giving the priority channel application qualification to the secondary system device.

8. The method according to claim 1, wherein, before the secondary system management node judging whether to give the priority channel application qualification to the secondary system device according to the request message, the method further comprises:
the secondary system management node setting a preset condition and a preset threshold corresponding to each piece of information, and setting adjustable information or nonadjustable information corresponding to each piece of information.

9. The method according to claim 1, wherein the response message comprises:
identification of giving or not giving the priority channel application qualification to the secondary system device.

10. The method according to claim 9, wherein the response message further comprises at least one of the following information: secondary system device identification, specific reason of giving or not giving, and parameter adjustment configuration.

11. A spectrum resource allocation system, comprising a secondary system device and a secondary system management node, wherein,
the secondary system device is configured to send a request message for a priority channel application qualification to the secondary system management node; and the secondary system management node is configured to judge whether to give the priority channel application qualification to the secondary system device according to the request message, and return a response message to the secondary system device according to the judgment result.

12. The spectrum resource allocation system according to claim 11, wherein the request message comprises one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

13. The spectrum resource allocation system according to claim 12, wherein the secondary system management node is configured to judge whether all information in the request message satisfies a condition for giving the priority channel application qualification; and when a judgment result is yes, give the priority channel application qualification to the secondary system device, and feed the response message about the priority channel application qualification back to the secondary system device.

14. The spectrum resource allocation system according to claim 13, wherein the secondary system management node is configured to, when at least one piece of information in the request message does not satisfy the condition for giving the priority channel application qualification, not give the priority channel application qualification to the secondary system device.

15. The spectrum resource allocation system according to claim 13, wherein the secondary system management node is configured to, when at least one piece of information in the request message does not satisfy the condition for giving the priority channel application qualification, judge whether a number of pieces of information, which does not satisfy the condition for giving the priority channel application qualification, in the request message is greater than a preset threshold; if yes, not give the priority channel application qualification to the secondary system device; and if no, give the priority channel application qualification to the secondary system device.

16. The spectrum resource allocation system according to claim 13, wherein the secondary system management node is configured to, when at least one piece of information in the request message does not satisfy the condition for giving the priority channel application qualification, judge whether information, which does not satisfy the condition for giving the priority channel application qualification, in the request message is preset adjustable information; if yes, give the priority channel application qualification to the secondary system device; and if no, not give the priority channel application qualification to the secondary system device.

17. The spectrum resource allocation system according to claim 13, wherein the secondary system management node is configured to, when at least one piece of information in the request message does not satisfy the condition for giving the priority channel application qualification, judge whether information, which does not satisfy the condition for giving the priority channel application qualification, in the request message is preset nonadjustable information; if yes, not give the priority channel application qualification to the secondary system device; and if no, give the priority channel application qualification to the secondary system device.

18. A secondary system management node, comprising a request message receiving module, a judgment module and a response module, wherein,
the request message receiving module is configured to receive a request message sent by a secondary system device for a priority channel application qualification;
the judgment module is configured to judge whether to give the priority channel application qualification to the secondary system device according to the request message; and
the response module is configured to return a response message to the secondary system device according to the judgment result of the judgment module.

19. The secondary system management node according to claim 18, wherein the request message comprises one or any combinations of the following information: request reason, secondary system device parameter, size of frequency-domain resource of pre-applied priority channel, size or time length of time-domain resource of pre-applied priority channel, range of region resource of pre-applied priority channel, prepaid price and interference threshold.

20. The secondary system management node according to claim 19, wherein the judgment module is configured to judge whether all information in the request message satisfies a condition for giving the priority channel application qualification, and when a judgment result is yes, give the priority channel application qualification to the secondary system device, and feed the response message about the priority channel application qualification back to the secondary system device.

21. The secondary system management node according to claim 20, wherein the judgment module is configured to, when at least one piece of information in the request message does not satisfy the condition for giving the priority channel application qualification, not give the priority channel application qualification to the secondary system device.

22. The secondary system management node according to claim 20, wherein the judgment module is configured to, when at least one piece of information in the request message does not satisfy the condition for giving the priority channel application qualification, judge whether a number of pieces of information, which does not satisfy the condition for giving the priority channel application qualification, in the request message is greater than a preset threshold; if yes, not give the priority channel application qualification to the secondary system device; and if no, give the priority channel application qualification to the secondary system device.

23. The secondary system management node according to claim 20, wherein the judgment module is configured to, when at least one piece of information in the request message does not satisfy the condition for giving the priority channel application qualification, judge whether information, which does not satisfy the condition for giving the priority channel application qualification, in the request message is preset adjustable information; if yes, give the priority channel application qualification to the secondary system device; and if no, not give the priority channel application qualification to the secondary system device.

24. The secondary system management node according to claim 20, wherein the judgment module is configured to, when at least one piece of information in the request message does not satisfy the condition for giving the priority channel application qualification, judge whether information, which does not satisfy the condition for giving the priority channel application qualification, in the request message is preset nonadjustable information; if yes, not give the priority channel application qualification to the secondary system device; and if no, give the priority channel application qualification to the secondary system device.

25. A computer-readable storage medium, comprising a group of computer-executable instructions used for executing the spectrum resource allocation method according to any one of claims 1-10.
